# EUROPEAN PATENT SPECIFICATION

(11) **EP 1 214 693 B1**
(45) Date of publication and mention of the grant of the patent: **18.01.2006**
(21) Application number: 00941032.5
(22) Date of filing: 04.07.2000
(51) Int. Cl.: G07F 7/08, G07F 7/10, H04M 15/00, H04Q 7/38

(54) **METHOD AND SYSTEM FOR PAYMENT TRANSACTION**
VERFAHREN UND SYSTEM FüR BEZAHLUNGSTRANSAKTION
PROCEDE ET SYSTEME POUR TRANSACTION DE PAIEMENT

(30) Priority: 05.07.1999 NO 993332
(43) Date of publication of application: 19.06.2002
(73) Proprietor: Hoili, Jens Petter, 1619 Fredrikstad (NO)
(72) Inventor: Hoili, Jens Petter, 1619 Fredrikstad (NO)
(74) Representative: Bucks, Teresa Anne
(86) International application number: PCT/NO2000/000230
(87) International publication number: WO 2001/003078

(56) References cited:
- WO-A1-98/34203
- WO-A1-98/47116
- US-A- 5 608 778

## Description

The present invention relates to a method and a system for performing a payment transaction between a customer, a sales location and a payment operator.

In business or sales locations, both public and private, including shops, restaurants, hotels and other service industries, etc., payment transactions are normally based on either traditional cash payment, or on the use of payment machines for payment cards. These well-established methods of performing payment transactions require the customer either to be in possession of cash in the form of notes or coins, or he/she must have a payment card in the form of a magnetic or smart card.

It looks as if cash is a means of payment which will be less widely used in the future on account of the substantial costs involved. These costs are due amongst other things to the extensive mechanical routines involved in issuing new coins and notes, as well as resource-demanding and sometimes risky routines for handling, collecting, transporting and storing money in the form of cash.

Today the use of payment terminals or machines with magnetic cards/smart cards is very widespread and also considered to be a rational payment routine. However, it is encumbered with disadvantages such as cost-demanding production and distribution of cards. A card is usually renewed after two years due to wear. The way in which the payment terminals work is conducive to wear. It is the "read head" for reading the magnetic card which is the weak point here.

It is relatively expensive for a business place to use payment terminals. In the first place, the payment terminals have a relatively expensive production cost. Then such terminals are connected to a telecommunication or data network for transfer of data, thereby adding to the costs. Banks and card companies, moreover, charge a high price for their services, which in itself makes the price higher for a consumer. Today the banks have complete freedom to decide both the price of what a business place must pay in order to possess a payment terminal, and the consumer's fees for the use of the payment card in the machine.

Attempts have also been made earlier to provide new ways of effecting payment transactions, whose object is, amongst other things, to redress the aforementioned problems.

WO 98/34203 discloses a method and an apparatus for performing financial transactions using a mobile communication unit. The publication suggests the possibility of using a wireless connection, particularly infrared, between a mobile phone and a cashier register in order to transfer transaction data. All communication steps are performed via a central, financial transaction clearinghouse, which implies that the cashier register must be able to communicate with a telecommunication network.

A previous known solution whose aim is to offer a customer the possibility of carrying out goods or service purchases by means of a mobile telephone, is disclosed in US patent 5.608.778. This publication describes a system where by means of the mobile telephone the customer can obtain credit when making a purchase at a sales location. The customer's mobile telephone is wirelessly connected to a base station. The base station can also communicate with a credit centre, and the credit centre can further communicate with terminal equipment at the sales location. The publication also describes various communication protocols for performing a transaction where the customer obtains credit from the credit centre when purchasing goods or services at the sales location. Fig. 4 of the publication illustrates such a protocol, where a part of the method for the transaction consists in the following steps:
- the mobile phone transfers data to the terminal equipment at the sales location, which data comprises identification for the mobile telephone, a transaction password and an authorisation, whereupon
- the terminal equipment transfers data to the credit centre, whereupon
- the credit centre transfers a confirmation to the terminal equipment, and finally
- the terminal equipment transfers the confirmation to the mobile telephone.

The transfer of data from the mobile telephone to the terminal equipment is stated to take place by means of the mobile telephone's radio transfer, the terminal equipment being linked to a receiver with low sensitivity, which can receive radio signals from the mobile telephone.

This known protocol permits goods and services to be purchased at the sales location, where a settlement is subsequently effected between the customer and the credit centre. The credit centre may, for example, be a company associated with the mobile telephone company, thus enabling the settlement for the goods or services to be effected by means of the same account as the account for other use of the mobile telephone.

The method and the system disclosed in the publication, however, have some weaknesses, which it is the object of the present invention to redress.

A first weakness is that the terminal equipment at the sales location must be in communicative connection with the credit centre, for example by being connected to a telephone or mobile telephone network.

A second weakness of the known system is that the local, low-sensitivity radio receiver may tend to be subject to interference from other mobile telephones or other communication devices, and therefore there is a need to provide a more secure and reliable form of communication between the mobile telephone and the terminal equipment.

A first object of the present invention is to provide a method for performing a payment transaction as mentioned at the beginning, and which is not encumbered by the above drawbacks. This object is achieved by means of a method as stated in the introductory part of the following claim 1,
characterized by the features which are indicated in the characterizing part of the claim.

A second object of the present invention is to provide a system for performing a payment transaction as mentioned at the beginning, and which is not encumbered by the above drawbacks. This object is achieved by means of a system as stated in the introductory part of the following claim 7,
characterized by the features which are indicated in the characterizing part of the claim.

Further advantages are obtained by means of the features in the dependent claims.

The invention will now be described in more detail with reference to the drawings, in which
fig. 1 illustrates a method according to the invention, and
figs. 2a and 2b illustrate a system according to the invention.

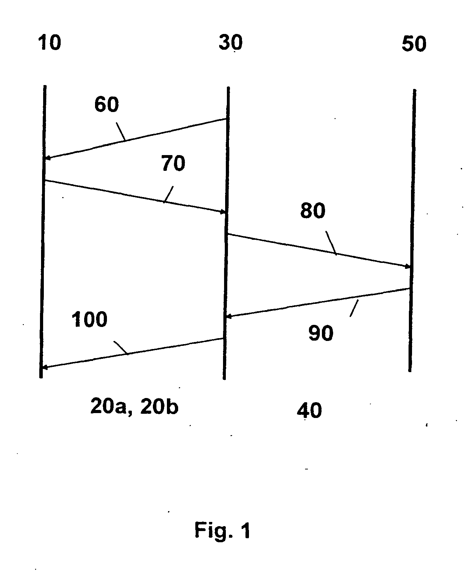

Figure 1 illustrates which steps are included in an embodiment of a method according to the invention.

A mobile communication unit 30, which preferably is the customer's mobile telephone, first establishes 60 a communication with a special payment terminal 10 at the sales location. Unlike traditional payment terminals, this payment terminal 10 is not necessarily equipped with means for communication via the telecommunication network, but instead is arranged for local communication with the mobile telephone 30, which then performs the further communication with the surrounding world.

The communication between the mobile telephone 30 and the payment terminal 10 takes place preferably by placing the mobile telephone in physical, electrical connection 20a with the payment terminal. For this purpose the mobile telephone's built-in communication port is preferably employed. An alternative solution is to employ wireless, but not radio-based transfer 20b, such as, for example, optical transfer, particularly infrared transfer (IrDa). A number of mobile telephones today are equipped with means for such infrared communication. A further alternative which still lies within the scope of the invention, but which, if used, redresses the second of the disadvantages of the prior art as mentioned above, is to employ radio-based communication in the same way as in the above-mentioned publication, with a radio receiver provided in the payment terminal. Such radio-based communication between the mobile telephone and the payment terminal may employ different frequencies from the ordinary communication frequency for the mobile telephone, and may, for example, be based on technology according to the Bluetooth specification.

In connection with the establishment 60 of communication connection between the mobile telephone and the payment terminal, initial data may be transferred from the mobile telephone, which, for example, may comprise information which is typed in on the mobile telephone's keyboard. This may comprise an identification or authentication of the customer and/or the sales location.

After establishing 60 the communication connection, if it is equipped with display means 12, the payment terminal 10 can display the data or parts of the data which are transferred from the mobile telephone, possibly together with information which is contained in the payment terminal 10 concerning the transaction, for example the amount which has to be paid.

When the communication connection 20a, 20b between the mobile telephone and the payment terminal has been established 60, the payment terminal transfers 70 information concerning the transaction via the established communication connection 20a, 20b to the mobile telephone. This information will preferably at least comprise the amount covered by the transaction, any other information on what is involved in the transaction, such as number and types of goods and services, and in addition an identification of the sales location. The information may further comprise an identification of the mobile telephone, information concerning its subscription, an associated telephone number or the mobile telephone's owner. The transferred identification of the sales location can be found stored in storage means in the payment terminal 10, but it can alternatively be read into a keyboard or other input unit on the mobile telephone 30 or on the payment terminal 10. The preferred embodiment of the invention is to have the identification of the sales location broadcast, for example by a radio transmitter provided locally at or near the sales location, so that it can be received by receiver equipment in the payment terminal and subsequently transferred to the mobile telephone. This preferred embodiment is particularly appropriate if the payment terminal is of a mobile type, which thereby can be moved from one sales location to another, where it is used without any reprogramming or similar modification.

This information is then further transferred 80 to an operator system 50. This communication takes place through a network 40 comprising the ordinary mobile telephone network used by the mobile telephone (for example the GSM system), and which moreover may comprise other networks to which the mobile telephone network is connected, for example the ordinary fixed telecommunication network.

Alternatively, some parts of the abovementioned information can be excluded when transferring from the mobile telephone to the operator system, and/or additional information can be added by means of this transfer. In each case, however, at least information concerning the transaction is transferred.

According to the invention, therefore, information concerning the transaction is transferred 70 from the payment terminal 10 to the mobile telephone 30, and subsequently 80 from the mobile telephone 30 to the operator system 50. At this point the invention differs significantly from the previously mentioned system from US-5.608.778, and in itself also from the known, traditional payment terminals, where information concerning the transaction is transferred from a payment terminal to an operator system, a credit centre, a bank or the like. Since the mobile telephone 30 replaces the payment terminal's communication means with the telecommunication network, the payment terminal which is used in the method and the system according to the invention can be provided as an independent unit, which only needs to be able to communicate with an internal system at the sales location, and locally with the mobile telephone via the previously mentioned electrical or optical communication connection.

According to the method illustrated in figure 1, the operator system 50 further registers the received information concerning the transaction. The operator system can thereby perform subsequent charging, invoicing or other settlement, with the obj ect of achieving agreement in the final settlement with the customer and with the sales location. This settlement may, for example, be effected by monthly, collective statements of account. If the operator system has a connection or a collaboration with the mobile telephone company, the statements of account may be combined with the ordinary accounts for the use of the mobile telephone.

In an embodiment of the method illustrated in fig. 1, after this registration the operator system will transmit 90 back to the mobile telephone 30 a confirmation that the registration has been accomplished. This confirmation will preferably be further transmitted 100 by the mobile telephone 30 through the electrical, optical/infrared or similar communication connection 20a, 20b to the payment terminal 10.

In one embodiment, moreover, either the payment terminal 10 or the mobile telephone 30 will provide an indication to the customer that the confirmation has been received. This indication may be provided by means of any kind of indicator, for example of a visual or audible type, provided in the payment terminal or on the mobile telephone. For example the indication may be provided via the mobile telephone's ordinary display unit.

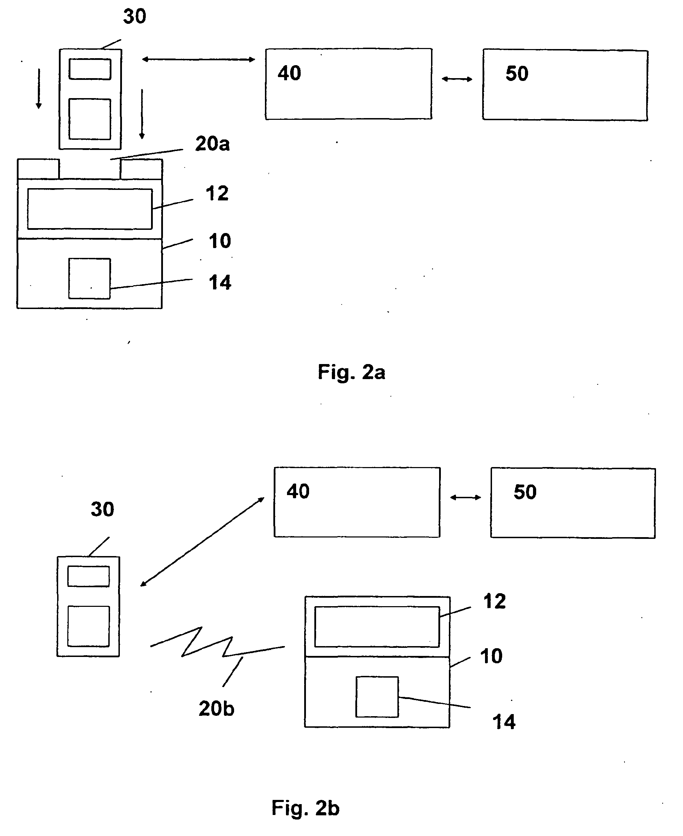

Figure 2a illustrates an embodiment of a system according to the invention. The system comprises a mobile telephone 30, a payment terminal 10 and an operator system 50 which are connected to a network 40 which can communicate with the mobile telephone. Between the payment terminal 10 and the mobile telephone there is a communication connection 20a. In the embodiment in fig. 2a this consists of an electrical, preferably a multicore connection which is composed of a communication port with which the mobile telephone 30 is equipped, and a corresponding communication port in the payment terminal 10.

Figure 2b illustrates an alternative embodiment, which is identical to the embodiment in figure 2a except for the communication connection 20b between the mobile telephone 30 and the payment terminal 10. In this case it is not designed as an electrical, direct connection, but comprises optical transmitters and receivers, preferably based on infrared light, mounted on both sides of the communication connection.

Electrical and infrared communication connection between a mobile telephone and an external unit is well-known per se. Many mobile telephones today are equipped with such communication ports as standard equipment, but this is for entirely different purposes than in the present case, viz. to provide a system for performing payment transactions.

While reference is made to mobile telephones in the description of the embodiments, it should be particularly emphasized that the invention will also work equally well with other mobile or wireless communication units. Similarly, the term mobile telephone network refers to any kind of wireless communication system, both existing and prospective, and systems based on both local base stations and satellite communication.

## Claims

1. A method for performing a payment transaction between a customer, a sales location and a payment operator, where the customer is equipped with a mobile communication unit (30), where the sales location is equipped with a payment terminal (10) and where the payment operator is equipped with an operator system (50) which is connected to a network (40) which can communicate with the customer's mobile communication unit (30), which method comprises the following steps:
- a communication connection (20a, 20b) is established (60) between the mobile communication unit (30) and the payment terminal (10),
- the payment terminal (10) transfers (70) data comprising information concerning the transaction via the communication connection (20a, 20b) to the mobile communication unit (30),
- the mobile communication unit (30) transfers (80) data comprising information concerning the transaction via the network (40) to the operator system (50), and
- the operator system (50) registers data comprising information concerning the transaction for subsequent charging, invoicing or other settlement, wherein the data which are transferred (70) via the communication connection from the payment terminal (10) to the mobile communication unit (30) and the data which are transferred (80) via the network (40) from the mobile communication unit (30) to the operator system (50) comprise data identifying the sales location and data representing the amount which has to be paid,
**characterized in that**
the data identifying the sales location are broadcast through a local radio broadcasting system at the sales location and received by the payment terminal in advance of a payment transaction.

2. A method according to claim 1,
**characterized in that** it also comprises the following steps:
- the operator system transfers (90) data comprising a confirmation that the said registration has been accomplished via the network (40) to the mobile communication unit (30), whereupon the mobile communication unit (30) may provide an indication that data comprising such a confirmation has been received, and
- the mobile communication unit (30) transfers (100) data comprising a confirmation that the said registration has been accomplished via the communication connection (20a, 20b) to the payment terminal (10), whereupon the payment terminal (10) may provide an indication that data comprising such a confirmation has been received.

3. A method according to claims 1-2,
**characterized in that** the mobile communication unit (30) is a mobile telephone, and that the network (40) is a telecommunication network which includes a mobile telephone network.

4. A method according to claims 1-3,
**characterized in that** the communication connection (20a, 20b) between the mobile communication unit and the payment terminal is established by an electrical connection (20a) through a communication port in the mobile communication unit.

5. A method according to claims 1-3,
**characterized in that** the communication connection (20a, 20b) between the mobile communication unit and the payment terminal is established by an optical connection (20b), preferably infrared transfer.

6. A method according to claim 3,
**characterized in that** the operator system (50) also fetches information concerning the payment location by means of services in the mobile telephone network (40).

7. A system for performing a payment transaction between a customer, a sales location and a payment operator, comprising a mobile communication unit (30) for the customer, a payment terminal (10) for the sales location and an operator system (50) for the payment operator connected to a network (40) which can communicate with the mobile communication unit (30), comprising
- a communication connection (20a, 20b) between the mobile communication unit (30) and the payment terminal (10), which comprises an electrical or optical communication port in the mobile communication unit (30) which is adapted to a corresponding communication port in the payment terminal (10),
**characterized in that** the system further comprises
- a radio transmitter provided locally at the sales location, arranged to broadcast an identification for the sales location, and
- receiver equipment in the payment terminal (10), arranged for receiving in advance of a payment transaction said identification from said radio transmitter, allowing information comprising said identification and data representing the amount which has to be paid to be transferred to the mobile communication unit via the communication connection.

8. A system according to claim 7,
**characterized in that** the mobile communication unit (30) is a mobile telephone, and that the network (40) comprises a mobile telephone network.

## Patentansprüche

1. Ein Verfahren zum Ausführen eines Zahlungsvorganges zwischen einem Kunden, einer Verkaufsstelle und einem Zahlungsbetreiber, wobei der Kunde mit einer mobilen Kommunikationseinheit (30) ausgestattet ist, wobei die Verkaufsstelle mit einem Zahlungsendgerät (10) ausgestattet ist und wobei der Zahlungsbetreiber mit einem Betreibersystem (50) ausgestattet ist, das mit einem Netz (40) verbunden ist, das mit der mobilen Kommunikationseinheit (30) des Kunden kommunizieren kann, und wobei das Verfahren die folgenden Schritte umfasst:
- eine Kommunikationsverbindung (20a, 20b) wird zwischen der mobilen Kommunikationseinheit (30) und dem Zahlungsendgerät (10) eingerichtet (60),
- das Zahlungsendgerät (10) überträgt (70) Daten, die Informationen bezüglich der Transaktion beinhalten, über die Kommunikationsverbindung (20a, 20b) an die mobile Kommunikationseinheit (30),
- die mobile Kommunikationseinheit (30) überträgt (80) Daten, die Informationen bezüglich der Transaktion beinhalten, über das Netz (40) an das Betreibersystem (50), und
- das Betreibersystem (50) registriert Daten, die Informationen bezüglich der Transaktion beinhalten, für nachträgliches in Rechnung stellen, Abrechnung oder andere Zahlung, wobei die Daten, die über die Kommunikationsverbindung von dem Zahlungsendgerät (10) zu der mobilen Kommunikationseinheit (30) übertragen (70) werden, und die Daten, die über das Netz (40) von der mobilen Kommunikationseinheit (30) an das Betreibersystem (50) übertragen (80) werden, Daten, die die Verkaufsstelle identifizieren und Daten, die den zu bezahlenden Betrag repräsentieren, beinhalten,
**gekennzeichnet dadurch,**
**dass** die Daten, die die Verkaufsstelle identifizieren, über ein lokales Funkübertragungssystem an der Verkaufsstelle übertragen werden und durch das Zahlungsendgerät vor einem Zahlungsvorgang empfangen wird.

2. Ein Verfahren nach Anspruch 1, **gekennzeichnet dadurch, dass** es auch die folgenden Schritte umfasst:
- das Betreibersystem überträgt (90) Daten, die eine Bestätigung beinhalten, dass die Registrierung über das Netz (40) an die mobile Kommunikationseinheit (30) durchgeführt wurde, wonach die mobile Kommunikationseinheit (30) eine Anzeige, dass eine solche Bestätigung beinhaltende Daten empfangen wurden, bereitstellen kann, und
- die mobile Kommunikationseinheit (30) überträgt (100) Daten, die eine Bestätigung beinhalten, dass die Registrierung über die Kommunikationsverbindung (20a, 20b) an das Zahlungsendgerät (10) durchgeführt wurde, wonach das Zahlungsendgerät (10) eine Anzeige, dass eine solche Bestätigung beinhaltende Daten empfangen wurden, bereitstellen kann.

3. Ein Verfahren nach den Ansprüchen 1-2, **gekennzeichnet dadurch, dass** die mobile Kommunikationseinheit (30) ein Mobiltelefon ist, und dass das Netz (40) ein Telekommunikationsnetz ist, das ein Mobiltelefonnetz beinhaltet.

4. Ein Verfahren nach den Ansprüchen 1-3, **gekennzeichnet dadurch, dass** die Kommunikationsverbindung (20a, 20b) zwischen der mobilen Kommunikationseinheit und dem Zahlungsendgerät durch eine elektrische Verbindung (20a) über einen Kommunikationsanschluss in der mobilen Kommunikationseinrichtung eingerichtet ist.

5. Ein Verfahren nach den Ansprüchen 1-3, **gekennzeichnet dadurch, dass** die Kommunikationsverbindung (20a, 20b) zwischen der mobilen Kommunikationseinheit und dem Zahlungsendgerät durch eine optische Verbindung (20a), bevorzugt Infrarotübertragung, eingerichtet ist.

6. Ein Verfahren nach Anspruch 3,
**gekennzeichnet dadurch, dass** das Betreibersystem (50) auch Informationen bezüglich der Zahlungsstelle durch Serviceeinrichtungen in dem Mobiltelefonnetz (40) abruft.

7. Ein System zum Ausführen eines Zahlungsvorganges zwischen einem Kunden, einer Zahlungsstelle und einem Zahlungsbetreiber, umfassend eine mobile Kommunikationseinheit (30) für den Kunden, ein Zahlungsendgerät (10) für die Verkaufsstelle und ein Betreibersystem (50) für den Zahlungsbetreiber, das mit dem Netz (40) verbunden ist, das mit der mobilen Kommunikationseinheit (30) kommunizieren kann, umfassend
- eine Kommunikationsverbindung (20a, 20b) zwischen der mobilen Kommunikationseinheit (30) und dem Zahlungsendgerät (10), die einen elektrischen oder optischen Kommunikationsanschluss in der mobilen Kommunikationseinheit (30) beinhaltet, der an einen entsprechenden Kommunikationsanschluss im Zahlungsendgerät (10) angepasst ist, **gekennzeichnet dadurch, dass** das System ferner beinhaltet
- einen lokal an der Verkaufsstelle bereitgestellten Funküberträger, der eingerichtet ist, um eine Identifikation für die Verkaufsstelle zu übertragen, und
- Empfängerausstattung in dem Zahlungsendgerät (10), die für das Empfangen der Identifikation von dem Funküberträger vor einer Zahlungstransaktion eingerichtet ist, was es ermöglicht, dass Information, die die Identifikation und Daten, die den zu bezahlenden Betrag darstellen, umfasst, an die mobile Kommunikationseinheit über die Kommunikationsverbindung übertragen wird.

8. Ein System nach Anspruch 7,
**gekennzeichnet dadurch, dass** die mobile Kommunikationseinheit (30) ein Mobiltelefon ist, und dass das Netz (40) ein Mobiltelefonnetz beinhaltet.

## Revendications

1. Procédé d'exécution d'une opération de paiement entre un client, un emplacement commercial et un opérateur de paiement, dans lequel le client est équipé d'une unité de communication mobile (30), dans lequel l'emplacement commercial est équipé d'un terminal de paiement (10) et dans lequel l'opérateur de paiement est équipé d'un système opérateur (50) qui est connecté à un réseau (40) qui peut communiquer avec l'unité de communication mobile du client (30), lequel procédé comprend les étapes suivantes :
- une connexion de communication (20a, 20b) est établie (60) entre l'unité de communication mobile (30) et le terminal de paiement (10),
- le terminal de paiement (10) transfère (70) des données comprenant des informations concernant l'opération via la connexion de communication (20a, 20b) vers l'unité de communication mobile (30),
- l'unité de communication mobile (30) transfère (80) des données comprenant des informations concernant l'opération via le réseau (40) vers le système opérateur (50), et
- le système opérateur (50) enregistre des données comprenant des informations concernant l'opération pour un paiement, une facturation ou un autre règlement ultérieur, dans lequel les données qui sont transférées (70) via la connexion de communication depuis le terminal de paiement (10) vers l'unité de communication mobile (30) et les données qui sont transférées (80) via le réseau (40) depuis l'unité de communication mobile (30) vers le système opérateur (50) comprennent des données identifiant l'emplacement commercial et des données représentant le montant à payer,
**caractérisé en ce que**
les données identifiant l'emplacement commercial sont diffusées via un système de radiodiffusion local au niveau de l'emplacement commercial et reçues par le terminal de paiement avant une opération de paiement.

2. Procédé selon la revendication 1,
**caractérisé en ce qu'**il comprend également les étapes suivantes :
- le système opérateur transfère (90) des données comprenant une confirmation selon laquelle ledit enregistrement a été effectué via le réseau (40) jusqu'à l'unité de communication mobile (30), à la suite de quoi l'unité de communication mobile (30) peut fournir une indication selon laquelle des données comprenant une telle confirmation ont été reçues, et
- l'unité de communication mobile (30) transfère (100) des données comprenant une confirmation selon laquelle ledit enregistrement a été effectué via la connexion de communication (20a, 20b) jusqu'au terminal de paiement (10), à la suite de quoi le terminal de paiement (10) peut fournir une indication selon laquelle des données comprenant une telle confirmation ont été reçues.

3. Procédé selon la revendication 1 à 2,
**caractérisé en ce que** l'unité de communication mobile (30) est un téléphone mobile, et **en ce que** le réseau (40) est un réseau de télécommunication qui comprend un réseau de téléphonie mobile.

4. Procédé selon les revendications 1 à 3,
**caractérisé en ce que** la connexion de communication (20a, 20b) entre l'unité de communication mobile et le terminal de paiement est établie par une connexion électrique (20a) via un port de communication dans l'unité de communication mobile.

5. Procédé selon les revendications 1 à 3,
**caractérisé en ce que** la connexion de communication (20a, 20b) entre l'unité de communication mobile et le terminal de paiement est établie par une connexion optique (20b), de préférence par un transfert infrarouge.

6. Procédé selon la revendication 3,
**caractérisé en ce que** le système opérateur (50) extrait également des informations concernant l'emplacement commercial au moyen de services du réseau de téléphonie mobile (40).

7. Système destiné à exécuter une opération de paiement entre un client, un emplacement commercial et un opérateur de paiement, comprenant une unité de communication mobile (30) pour le client, un terminal de paiement (10) pour l'emplacement commercial et un système opérateur (50) pour l'opérateur de paiement connecté à un réseau (40) qui peut communiquer avec l'unité de communication mobile (30), comprenant
- une connexion de communication (20a, 20b) entre l'unité de communication mobile (30) et le terminal de paiement (10), qui comprend un port de communication électrique ou optique dans l'unité de communication mobile (30) qui est adapté à un port de communication correspondant dans le terminal de paiement (10),
**caractérisé en ce que** le système comprend en outre
- un émetteur radio prévu localement au niveau de l'emplacement commercial, agencé pour diffuser une identification pour l'emplacement commercial, et
- un équipement récepteur dans le terminal de paiement (10), agencé pour recevoir avant une opération de paiement ladite identification provenant dudit émetteur radio, permettant que des informations comprenant ladite identification et des données représentant le montant à payer soient transférées vers l'unité de communication mobile via la connexion de communication.

8. Système selon la revendication 7,
**caractérisé en ce que** l'unité de communication mobile (30) est un téléphone mobile, et **en ce que** le réseau (40) comprend un réseau de téléphonie mobile.
